# EUROPÄISCHE PATENTSCHRIFT

(11) **EP 1 538 373 B1**
(45) Veröffentlichungstag und Bekanntmachung des Hinweises auf die Patenterteilung: **20.06.2007**
(21) Anmeldenummer: 04028283.2
(22) Anmeldetag: 30.11.2004
(51) Int. Cl.: F16J 1/22, F02F 3/00

(54) **Triebwerk einer Brennkraftmaschine mit Kolben und Pleuelstange**
Driving mechanism of a combustion engine comprising a piston and a piston rod
Mécanisme d'entraînement de moteur à combustion comprenant un piston et une bielle

(30) Priorität: 02.12.2003 DE 10356200
(43) Veröffentlichungstag der Anmeldung: 08.06.2005
(73) Patentinhaber: MAN B&W Diesel AG, 86224 Augsburg (DE)
(72) Erfinder: Söngen, Matthias, 86165 Augsburg (DE)
(74) Vertreter: Grünberger, Christian Thomas

(56) Entgegenhaltungen:
- DE-C- 749 285
- FR-A- 1 083 390
- US-A- 2 830 860
- PATENT ABSTRACTS OF JAPAN Bd. 2000, Nr. 15, 6. April 2001 (2001-04-06) -& JP 2000 337506 A (TOYOTA MOTOR CORP), 5. Dezember 2000 (2000-12-05)

## Beschreibung

Die Erfindung betrifft ein Triebwerk mit Kolben und Pleuelstange gemäß dem Oberbegriff des Patentanspruchs 1.

Die Pleuelstange besteht im wesentlichen aus einem Pleuelschaft und zwei endseitigen Lagern, die den Kolben und den entsprechenden Kurbelzapfen einer Kurbelwelle zu einem Triebwerk verknüpfen. Das eine Ende führt schwingende Bewegungen aus, das andere bewegt sich mit dem Kurbelzapfen im Kurbelkreis, so dass sich eine sogenannte "Pleuelgeige", d.h. eine geigenförmige Bewegungskurve der Pleuelstange ausbildet.

So ist beispielsweise aus der DE 35 05 964 C1 ein Triebwerk mit einer Pleuelstange bekannt, die in üblicher Weise ein endseitiges Lager in Form eines Pleuelkopfes, d.h. das obere Pleuelauge, den Pleuelschaft und das andere endseitige Lager in Form des Pleuellagers, d.h. das untere Pleuelauge, umfasst und so das Verbindungsglied zwischen dem geradeführenden Teil eines Kurbeltriebes, also dem Kolben, und der Kurbelwelle darstellt. Der Pleuelkopf kann geschlossen oder geteilt sein. Der Lagerdeckel des geteilten Pleuellagers, also des unteren Pleuelauges, ist durch mindestens zwei eingepasste Dehnschrauben mit dem Pleuelfuß verbunden. Das durch Pleuelfuß und Pleueldeckel gebildete Pleuellager, in das sich zu einer vollständigen Lagerhülse ergänzende Lagerschalen eingesetzt sind und die zur Aufnahme des Kurbelzapfens vorgesehen ist, wird bei Druckwechsel stoßartig beansprucht, dabei ergeben sich hohe Lagerbelastungen.

Da bei einer Montage, bzw. beim Ziehen des Kolbens, teilweise die Pleuelstange durch den Motorzylinder geführt werden muss, ist zumindest bei starkem Kurbelzapfen bisher in der Regel eine Teilung des unteren Pleuelauges oder die Teilung des Pleuelschaftes erforderlich.

Der Kolben arbeitet unter schwerster mechanischer und thermischer Belastung. Dabei muss er mehrere Aufgaben, wie die Umwandlung von Druckenergie in mechanische Arbeit, Abdichtung des Zylinderraums gegen das Kurbelgehäuse und Geradführung des oberen Endes der Pleuelstange bei sogenannten Tauchkolbenmotoren, erfüllen. Die Lagerung des Kolbens am Pleuelkopf wird bisher in bekannter Weise mittels eines Kolbenbolzens im Pleuelauge, der die Kräfte eben zwischen Kolben und Pleuelstange überträgt, realisiert. Bisher wird die Lage des Kolbenbolzens von zwei Faktoren bestimmt. Um Kippbewegungen des Kolbens zu vermeiden, sollte sein Schwerpunkt auf der Achse des Bolzens liegen. Andererseits müsste der Kolbenbolzen in der Mitte des Schaftes des Kolbens befestigt sein, damit die Normalkraft gleichmäßig auf die Zylinderwand übertragen wird. Da beide Forderungen nicht gleichzeitig erfüllt werden können, baut man den Kolbenbolzen bisher ein wenig über der Schaftmitte ein.

Grosse Kolben bestehen bekanntlich aus zwei oder mehr Teilen. So wird der Kolbenboden beispielsweise aus Stahl oder Gusseisen mit dem Schaft beispielsweise aus Sondergusseisen oder einer Aluminiumlegierung zusammengeschraubt.

Aus der DE 100 46 214 C1 ist weiterhin ein Triebwerk bekannt, bei dem eine Pleuelstange in Form eines Marinekopfes mit einteiligem Pleuelschaft (was verglichen mit einem aus Montagegründen geteilten Pleuelschaft eine Gewichts- und Kosteneinsparung bedeutet) eingesetzt ist, die eine spezielle Ausbildung des Pleuellagers zur Aufnahme des Kurbelzapfens aufweist und somit eine kompakte Bauweise ermöglicht , aufgrund dieser zudem eine niedrigere Motorbauhöhe möglich und das Ziehen des Kolbens durch den Motorzylinder erheblich erleichtert ist.

Es besteht nun weiterhin das Bedürfnis, auch die Lagerung des Kolbens am Pleuelkopf, die eben bisher mittels eines Kolbenbolzens, der die Kräfte zwischen Kolben und Pleuelstange überträgt, und dem Pleuelauge realisiert ist, zu optimieren, insbesondere diese Kolben/Pleuelverbindung kompakter zu gestalten und die Kolbenmontage noch einfacher zu machen.

So behandelt bereits zum Beispiel die Patent Abstracts of Japan, Band 2000, Nr. 15, 6. April 2001 - JP 2000 337506 A, oder die DE 749 285 C, oder die US-A-2830860 einen Leichtmetallkolben einer Brennkraftmaschine und eine zu diesem gehörende Pleuelstange, wobei in der Kolbenmitte eine Lageranordnung zur Verbindung des Kolbens mit der Pleuelstange unter Ausbildung eines Formschlusses als Kugel-/Kalottenlagerung vorgesehen ist, in welche der Pleuelstangenkopf von der Seite her bzw. durch Drehung um 90° eingeschoben werden kann, so dass ein Kolbenbolzen entbehrlich ist. Zur Aufrechterhaltung des Formschlusses ist eine lösbare Verdrehsicherung vorgesehen.

Hiervon ausgehend ist es die Aufgabe der Erfindung, ein gattungsbildendes Triebwerk derart weiterzubilden, dass die Lagerung des Kolbens am Pleuelkopf unter Beibehaltung aller bisheriger Funktionen verbessert ist und insbesondere einen Kolben- ein/ausbau ohne aufwendiges Werkzeug möglich macht.

Diese Aufgabe wird erfindungsgemäß durch die kennzeichnenden Merkmale des Patentanspruchs 1 gelöst.

Dadurch, dass im entsicherten Zustand der Verdrehsicherung eine Lösung des Formschlusses durch Verdrehung des Kolbens um seine Achse möglich wird, also der Kolben ohne Pleuel aus dem Motorblock gezogen werden kann, kann eine Pleuelschaftteilung ebenfalls entfallen, ohne auf die spezielle Ausbildung des Pleuellagers gemäss der DE 100 46 214 C1 zurückgreifen zu müssen, so dass weitere Gewichts- und Kosteneinsparungen, sowie geringere dynamische Kräfte erzielt werden können.

Die Erfindung soll nachfolgend näher erläutert werden. In der zugehörigen Zeichnung zeigt schematisch, die
- Fig. 1: eine Draufsicht der erfindungsgemäßen Kugel- /Kalottenlagerung,
- Fig. 2: einen Teillängsschnitt gemäss A-A in Fig. 1 eines Marinekopfes mit ungeteiltem Pleuelschaft und erfindungsgemäß ausgebildeter Kugel-/Kalottenlagerung am Kolben,

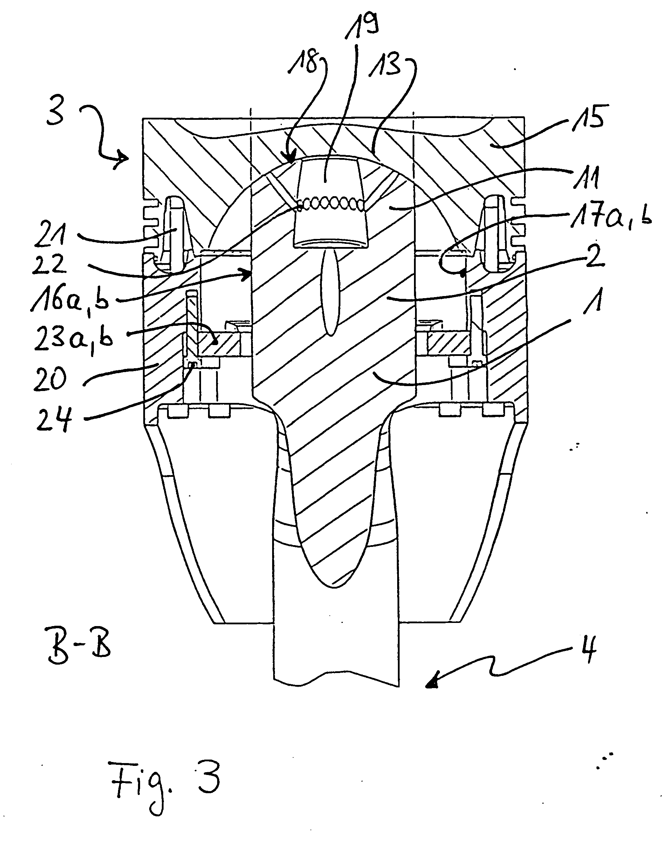

- Fig. 3: einen verglichen mit Fig. 2 um 90° gedrehten Teilquerschnitt des Marinekopfes gemäss B-B in Fig. 1 mit Kolben,
- Fig. 4: eine perspektivische Ansicht eines Triebwerks mit einer erfindungsgemäßen Lageranordnung des Kolbens am Pleuel im montierten Zustand, und
- Fig. 5: eine weitere perspektivische Ansicht gemäss der Fig. 3, wobei bei Lösung des Kolbenschaftes vom Kolbenboden der Pleuelkopf, d.h. das Kalottenteil im vom Kolbenboden, d.h. vom Lagerschild abgenommenen Zustand zu sehen ist,
- Fig. 6: eine Detailansicht aus der Verdrehsicherung zur Aufrechterhaltung des Formschlusses der erfindungsgemäßen Kugel- /Kalottenlagerung.

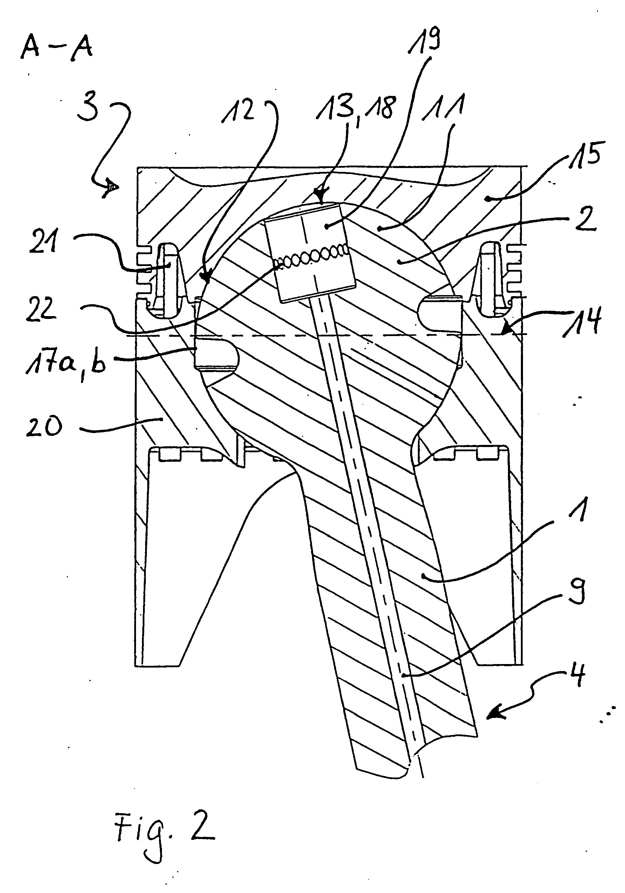

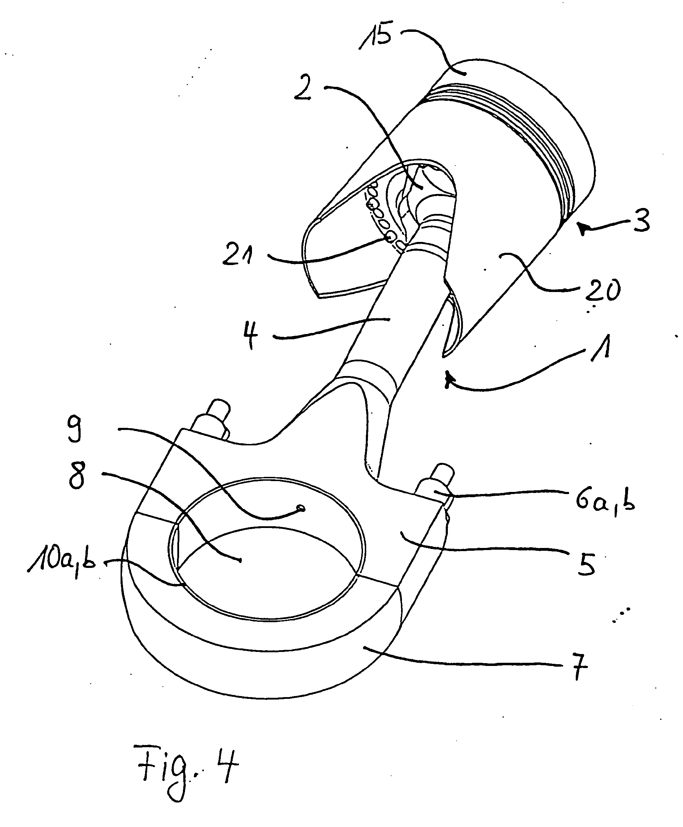

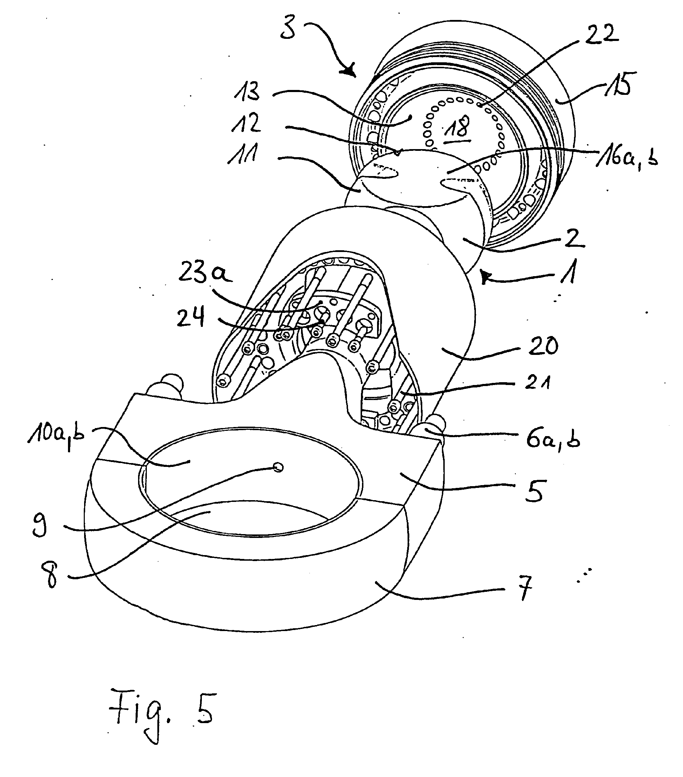

Die Pleuelstange 1 besteht gemäss der Fig. 2 aus einem ungeteilten Pleuelkopf 2, zur Aufnahme des Kolbens 3, ferner einen sich am Pleuelkopf 2 anschließenden ungeteilten Pleuelschaft 4 sowie gemäss der Fig. 4 und 5 einen sich daran anschließenden Pleuelfuss 5, der zusammen mit einem an ihm über mehrere Spann-, bzw. Dehnschrauben 6a, b befestigten Pleueldeckel 7 das Pleuellager, bzw. das untere Pleuelauge 8 bildet. Zur Schmierung des Pleuelkopfes 2 oder auch zur Kolbenkühlung ist der Pleuelschaft 4 in an sich bekannter Weise für die Ölzuführung längs durchbohrt, d.h. eine axiale Ölbohrung 9 mündet über ein Verteilungssystem 22 am Pleuelkopf 2.

Im Pleuelauge 8 des Pleuellagers (Fig. 4 und 5) sitzen zwei sich zu einer vollständigen Lagerhülse ergänzende Lagerschalen 10a, b, die den hier nicht gezeigten Kurbelzapfen in der Regel mit Verbleib eines Restspaltes im Gleitkontakt umgreifen.

Die Lagerung des Kolbens 3 am Pleuelkopf 2 umfasst ein Kalottenteil 11, das an seinem Außenumfang 12 eine auf einer Teilkugeloberfläche angeordnete Lagerfläche aufweist. An der dem sphärischen Oberflächenbereich dieser Lagerfläche gegenüberliegenden Seite ist eine ringförmige und entsprechend sphärisch ausgebildete Lageraufnahme in Form eines Lagerschildes 13 oder Trägerteils vorgesehen, so dass das Kalottenteil 11 um seinen Kalottenmittelpunkt relativ zu dem Lagerschild 13 oder zum Trägerteil verschwenkbar in der Lageraufnahme gehalten ist. Wie in Fig. 2 auch gut zu erkennen ist, weist das Kalottenteil 11 an seinem Außenumfang 12 also eine auf einer Teilkugeloberfläche angeordnete Lagerfläche auf, die sich beidseits einer Kalottenmittelebene 14 erstreckt, die durch die Stelle verläuft, an der das Kalottenteil 11 etwa seinen grössten Durchmesser hat.

In der in der Zeichnung gezeigten bevorzugter Ausbildung ist der Pleuelkopf 2 als kugelförmiges Kalottenteil 11 und der Kolbenboden 15 als Trägerteil 13 mit der Lageraufnahme in Form des Lagerschildes ausgebildet, es wäre jedoch auch die umgekehrte Ausbildung denkbar.

Im Ausführungsbeispiel (siehe insb. Fig. 2) wird ein zweiteiliger Kolben aus einem Kolbenoberteil, dem Kolbenboden 15, und einem Kolbenunterteil, dem Kolbenschaft 20, verwendet. Ein in bekannter Weise dreiteilig aufgebauter Kolben aus Kolbenkrone, Kolbenhemd und Kolbenunterteil ist in analoger Weise verwendbar. Kolbenboden 15 und Kolbenschaft 20 sind mittels mehrerer geeigneter Schrauben 21 miteinander verbindbar.

Das Unterteil 20 des Kolbens 3 umfasst in etwa als halbkugelförmige Schale den unteren Teil des Kalottenteils 11. Im Wechsel zwischen Zünd-OT und Überdeckungs-OT (in dieser Phase sind alle Ventile geöffnet) des 4-Takts stützen sich die Massenkräfte vom Kolben herrührend und die Zündkräfte entweder am Kolbenunterteil 20 oder am Kolbenboden 15 ab, so dass die bisherigen Funktionen eines (jetzt fehlenden) Kolbenbolzens komplett in der erfindungsgemäßen Lagerung aufgehen.

Es ergibt sich also einerseits ein kompakter Aufbau des Pleuels, insbesondere eines einteiligen Marinekopfes und Kolbens und andererseits wird das Kalottenteil aber auch gleichmäßig an seinem Umfang gegen das Lagerschild abgestützt.

Erfindungsgemäß umfasst die Kugel- /Kalottenlagerung 11, 13 zur Aufrechterhaltung des Formschlusses, eine lösbare Verdrehsicherung, die zudem im entsicherten Zustand eine Lösung des Formschlusses durch Verdrehung des Kolbens 3 um seine Achse erlaubt.

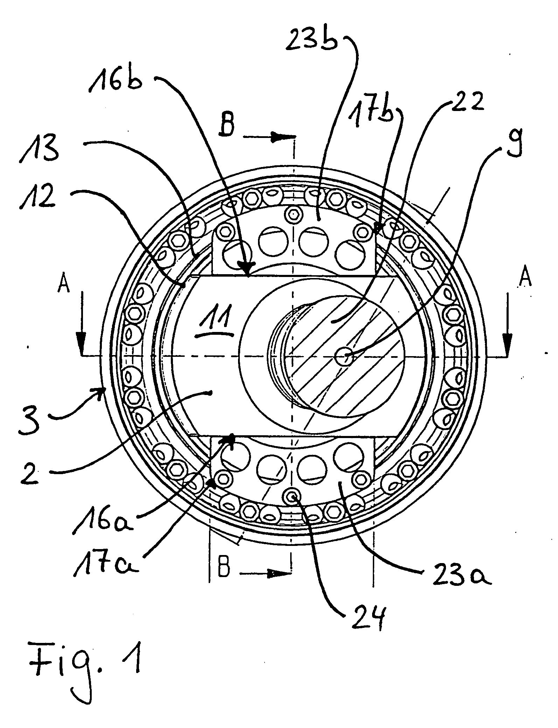

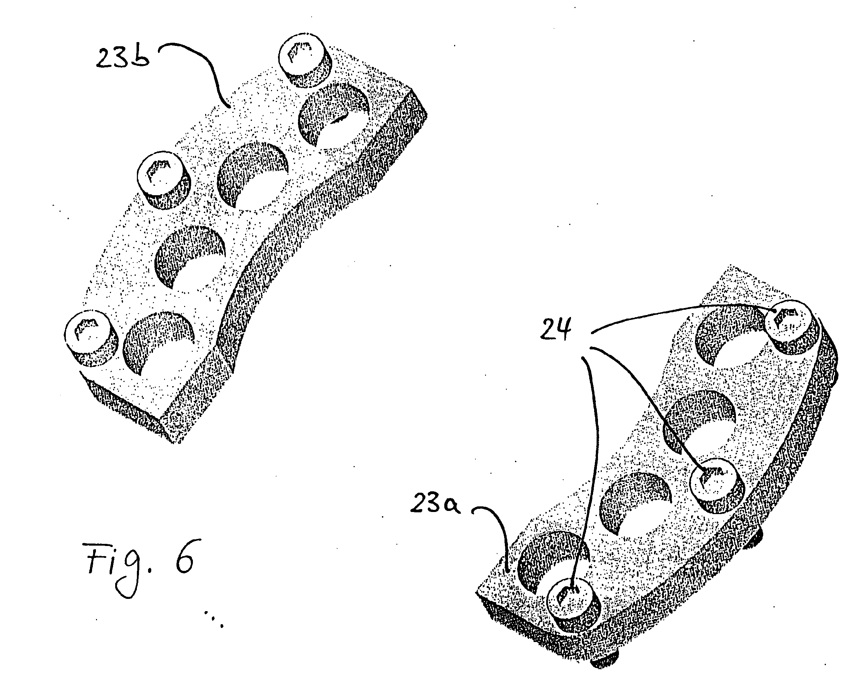

Insbesondere in Fig. 1 (in allen Figuren wird die entsprechende Kennzeichnung beibehalten) ist zu sehen, dass der Kolben 3 (im vorliegenden Fall das Kolbenunterteil 20) im Innenraum zur Aufnahme des Pleuelkopfes 2, also in der Lageraufnahme 13 in Umfangsrichtung, zusätzlich mindestens zwei, in bevorzugter Weise sich diametral gegenüberstehende Ausnehmungen 17a, b aufweist, die mittels je eines Verdrehsicherungselementes 23a, b (siehe auch Fig. 6) aufgefüllt sind, die außerdem mittels weniger Schrauben 24 im Kolben, d.h. hier im Kolbenunterteil 20 fixiert sind.

Das kugelförmige Kalottenteil 11, d.h. der kugelförmige Pleuelkopf 2 ist mit entsprechend den Ausnehmungen 17a, b abgeplatteten Wandabschnitten 16a, b ausgeführt, die sich im montierten Zustand an den Verdrehsicherungselementen 23a, b abstützen und somit eine relative Verdrehung des Kolbens 3 zum Pleuelkopf 2 zuverlässig verhindern.

In Fig. 6 sind beide Verdrehsicherungselemente 23a, b nochmals im Detail gezeigt, die jeweils mittels drei Schrauben 24 im Kolben 3 im Bereich der Ausnehmungen 17a, b zur Ausfüllung dieser Ausnehmungen 17a, b fixierbar, bzw zum Herausdrehen des Kolbens 3 lösbar sind.

Das wesentliche der Erfindung ist also eine Kugel-/Kalottenlagerung 11, 13, deren mit einer kugelförmigen Außenfläche 12 versehener und mit einem Schmiermittel getränkter Lagerkörper 11 gegen eine zu seiner axialen Anlage dienende, in einer topfartigen Ausnehmung des Lagerschildes 13 befindliche Ring- bzw. Teilkugelfläche aufgenommen wird und die Trennung der Pleuelstange 1 vom Kolben 3 in einfacher Weise dadurch geschehen kann, dass die Verdrehsicherungselemente 23a, b entfernt werden, eine zur Pleuelstange 1 relative Verdrehung des Kolbens 3 um 90° (wenn zwei Ausnehmungen 17a, b sich diametral gegenüberstehen, siehe Fig. 1) die sphärischen Oberflächenteile des Pleuelkopfes 2 in die Ausnehmungen 17a, b führt und die abgeplatteten Wandabschnitte 16a, b des Pleuelkopfes 2 den sphärischen Flächen des Lagerschildes 13 gegenüberstehen, so dass eine Trennung des Formschlusses der Kugel- /Kalottenlagerung 11, 13 erfolgt und der Kolben 3 einfach vom Pleuelkopf 2 abgenommen werden kann.

Um eine sichere Dauerschmierung der zur Beschreibung gelangten Kugel-/Kalottenlagerungl 1, 13 zu gewährleisten, ist am Lagerschild 13 stirnseitig vor der zur axialen Anlage des Lagerkörpers 11 bestimmten sphärischen Fläche 18 ein Schmiermittelvorratsraum 19 vorgesehen, dessen motorseitige Abdichtung wie üblich gewährleistet ist.

Die erfindungsgemäße Ausbildung der Kugel-/Kalottenlagerung 11, 13 verbessert weiterhin die direkte Gaskrafteinleitung in den Pleuelschaft 4, der bisherige Kolbenbolzen kann ersatzlos entfallen. Dadurch reduziert sich die oszillierende Masse deutlich (um ca. 20%). Auch die Reibleistung insgesamt wird geringer.

Es sei nochmals erwähnt, dass eine Pleuelschaftteilung grundsätzlich entfällt, da das Ziehen des Kolbens 3 durch den Motorzylinder jetzt in einfacher Weise bei komplett abgelöster Pleuelstange vonstatten gehen kann. Damit sind weitere Gewichts- und Kosteneinsparungen verbunden. Der Kolbenausbau ist also ohne aufwendiges Werkzeug (hydraulisches Werkzeug) durchzuführen, eine niedrige Kolbenausbauhöhe wird möglich.

### Bezugszeichenliste

- 1: Pleuelstange
- 2: Pleuelkopf
- 3: Kolben
- 4: Pleuelschaft
- 5: Pleuelfuss
- 6a, b: Spann-, bzw. Dehnschrauben
- 7: Pleueldeckel
- 8: Unteres Pleuelauge
- 9: Öhlbohrung
- 10a, b: Lagerschalen
- 11: Kalottenteil
- 12: Außenumfang des Kalottenteils
- 13: Lagerschild
- 14: Kalottenmittelebene
- 15: Kolbenboden
- 16a, b: abgeplattete Wandabschnitte
- 17a, b: Ausnehmungen
- 18: sphärische Fläche
- 19: Schmiermittelvorratsraum
- 20: Kolbenschaft
- 21: Schrauben
- 22: Verteilungssystem
- 23a, b: Verdrehsicherungselemente
- 24: Schrauben

## Patentansprüche

1. Triebwerk einer Brennkraftmaschine mit Kolben (3) und Pleuelstangen (1), wobei die Pleuelstange (1) über zwei endseitige Lageranordnungen einerseits mit Pleuelkopf (2) den Kolben (3) und andererseits unter Ausbildung eines Pleuelauges (8) den entsprechenden Kurbelzapfen einer Kurbelwelle umfassend miteinander verbindet, wobei die Lageranordnung zur Verbindung des Kolbens (3) mit dem Pleuelkopf (2) unter Ausbildung eines Formschlusses als Kugel-/Kalottenlagerung (11, 13) ausgebildet ist, derart, dass einerseits der Pleuelkopf (2) als Kalottenteil (11) mit einer kugelförmigen Außenfläche (12) und als Lagerfläche ausgebildet ist, die mit einem Schmiermittel getränkt ist und andererseits einen Kolbenboden (15) des Kolbens (3) mit einem entsprechend sphärisch geformten topfartigen Lagerschild (13) zur axialen Abstützung vorgesehen ist, und die Kugel-/Kalottenlagerung (11, 13) zur Aufrechterhaltung des Formschlusses eine lösbare Verdrehsicherung (16a, b; 17a, b; 23a, b) umfasst, die zudem im entsicherten Zustand eine Lösung des Formschlusses durch Verdrehung des Kolbens (3) um seine Achse erlaubt, **dadurch gekennzeichnet, dass** zur Ausbildung der Verdrehsicherung der Kolben (3) im Innenraum zur Aufnahme des Pleuelkopfes (2), also in der Lageraufnahme (13) in Umfangsrichtung, zusätzlich mindestens zwei, sich diametral gegenüberstehende Ausnehmungen (17a, b) aufweist, die mittels je eines Verdrehsicherungselementes (23a, b) aufgefüllt sind, wobei das kugelförmige Kalottenteil (11) mit entsprechend den Ausnehmungen (17a, b) abgeplatteten Wandabschnitten (16a, b) ausgeführt ist, die sich im montierten Zustand an den Verdrehsicherungselementen (23a, b) abstützen.

2. Triebwerk nach Anspruch 1, **dadurch gekennzeichnet, dass** zur Dauerschmierung der Kugel-/Kalottenlagerung (11, 13) der Pleuelschaft mit einer Ölbohrung (9) versehen ist, die in einen am Lagerschild (13) stirnseitig vor der zur axialen Anlage des Kalottenteils (11) bestimmten sphärischen Lagerfläche (18) vorgesehenen Schmiermittelvorratsraum (19) mündet.

## Claims

1. A driving mechanism of a combustion engine, comprising a piston (3) and a connecting rod (1); wherein, via two bearing arrangements at the ends, the connecting rod (1) connects together, on the one hand, the piston (3) by means of the connecting-rod head (2) and, on the other, the corresponding crank journal of a crankshaft in an encompassing manner with the formation of a connecting-rod eye (8); wherein the bearing arrangement for connecting the piston (3) to the connecting-rod head (2) is constructed, with the formation of a form-locking connection, as a ball-cap bearing arrangement (11, 13) in a manner such that, on the one hand, the connecting-rod head (2) is constructed as a cap part (11) with a ball-shaped outer face (12) and as a bearing face which is impregnated with a lubricant and, on the other hand, a piston top (15) of the piston (3) having a pot-like bearing plate (13) of correspondingly spherical shape is provided for axial support purposes, and the ball-cap bearing arrangement (11, 13) comprises, for the purpose of maintaining the form-locking connection, a releasable twist-proofing arrangement (16a, b; 17a, b; 23a, b) which, in addition, in the unlocked state, allows the undoing of the form-locking connection through the twisting of the piston (3) about its axis, **characterised in that**, for the purpose of constructing the twist-proofing arrangement, the piston (3) additionally has, in the interior space for receiving the connecting-rod head (2), that is to say in the bearing receptacle (13) in the peripheral direction, at least two diametrically opposite recesses (17a, b) which are filled up by means of a twist-proofing element (23a, b) in each case, the ball-shaped cap part (11) being designed with wall sections (16a, b) which are flattened in a manner corresponding to the recesses (17a, b) and are supported, when in the assembled state, against the twist-proofing elements (23a, b).

2. A driving mechanism according to claim 1, **characterised in that**, for the permanent lubrication of the ball-cap bearing arrangement (11, 13), the connecting-rod shaft is provided with an oil bore (9) which opens into a lubricant storage space (19) provided on the bearing plate (13) at the end face in front of the spherical bearing face (18) which is intended for the axial bearing contact of the cap part (11).

## Revendications

1. Mécanisme d'entraînement d'un moteur à combustion interne comprenant un piston (3) et des bielles (1), dans lequel la bielle (1) relie l'un à l'autre, au moyen de deux dispositifs de palier d'extrémité, d'une part le piston (3) avec une tête de bielle (2) et d'autre part le maneton correspondant d'un vilebrequin, en formant un oeil de tête de bielle (8) qui l'entoure, le dispositif de palier pour relier le piston (3) à la tête de bielle (2) est formé par un palier sphérique/calotte (11, 13) en complémentarité de forme, de sorte que d'une part la tête de bielle (2) est la rotule (11) ayant une surface extérieure sphérique (12) qui forme une face d'appui imprégnée de lubrifiant, et que d'autre part un fond de piston (15) du piston (3) est une cuvette de palier (13) en forme de pot sphérique correspondante en vue d'un appui axial, et le palier sphérique/calotte (11, 13) comprend, pour maintenir la complémentarité de forme, une protection amovible contre la rotation (16a, b; 17a, b; 23a, b) qui permet en plus, à l'état libéré, une séparation de la complémentarité de forme par rotation du piston (3) autour de son axe,
**caractérisé en ce que**
pour former la protection contre la rotation, le piston (3) comporte en plus dans l'espace intérieur destiné à recevoir la tête de bielle (2), donc dans la cuvette de palier (13) en direction périphérique, au moins deux dégagements (17a, b) diamétralement opposés, chacun occupés par un élément anti- rotation (23a, b), et la rotule sphérique (11) a des parties de paroi aplaties (16a, b) correspondant aux dégagements (17a, b), qui à l'état monté s'appuient sur les éléments antirotation (23a, b).

2. Mécanisme d'entraînement selon la revendication 1,
**caractérisé en ce que**
pour la lubrification permanente du palier sphérique/calotte (11, 13), le corps de bielle est pourvu d'un alésage de lubrification (9), qui débouche dans une chambre de réserve de lubrifiant (19) prévue côté frontal en face de la portée sphérique (18) destinée à l'appui axial de la partie de calotte (11) sur la cuvette de palier (13).
